# EUROPEAN PATENT SPECIFICATION

(11) **EP 1 314 615 B1**
(45) Date of publication and mention of the grant of the patent: **02.11.2006**
(21) Application number: 01963007.8
(22) Date of filing: 01.08.2001
(51) Int. Cl.: B60R 21/16

(54) **AIRBAG WITH A VARIABLE THICKNESS SEALING PATCH FOR SEALING THE GAS VENT HOLE**
AIRBAG MIT EINEM VERSCHLUSS UNTERSCHIEDLICHER DICKE ZUR DICHTUNG DES GASENTLÜFTUNGSÖFFNUNG
AIRBAG POURVU D'UN BOUCHON D'OBTURATION DE L'ORIFICE DE DECHARGE DE GAZ D'EPAISSEUR VARIABLE

(30) Priority: 03.08.2000 ES 200001987
(43) Date of publication of application: 28.05.2003
(73) Proprietor: Dalphi Metal Espana, S.A., 28006 Madrid (ES)
(72) Inventor: GRAS TOUS, Luis, E-28006 Madrid (ES)
(74) Representative: Elzaburu Marquez, Alberto
(86) International application number: PCT/ES2001/000310
(87) International publication number: WO 2002/014115

(56) References cited:
- EP-A- 0 835 787
- EP-A- 1 022 198
- GB-A- 2 306 409
- US-A- 5 704 639
- US-A- 5 803 121

## Description

### FIELD OF THE INVENTION

The present invention refers to an airbag provided with a sealing patch of variable thickness for the gas venting hole providing an increased protection for the driver of the vehicle or his/her occupants in case of a collision.

The present invention is applicable to the motor vehicle industry as a whole and particularly, to the field dedicated to the manufacture and/or assembly of auxiliary equipment and active safety devices in vehicles.

### BACKGROUND OF THE INVENTION

Numerous inflatable safety devices or airbags are known in the current state of the art, intended to soften the blow to the driver and, if pertinent, of occupants in a motor vehicle in the event of a collision and especially if the latter is head on.

The known airbags, normally located in the front and side areas of vehicles consist of a folded sack or bag, expandable and airtight and which are inflated with gas when a collision or impact is detected in the vehicle. Said bag has an opening or hole in its wall for the gas venting moments after inflation and once its restraining action has been satisfied.

Also known is the use of a membrane or additional patch to seal the mentioned gas outlet preventing the gas from being immediately released, but only after reaching a predetermined inside pressure. This permits the bag to be inflated longer and improves its pressure when softening the impact over the passenger. The patch breaks or detaches to release the gas from inside the bag, once the impact has been restrained and due to the pressure exerted over the airbag by the occupant's body and reached inside the bag.

The venting hole sealing patches known until now have different characteristics derived both from the material of which they are made and the shapes adopted, being affected by specific drawbacks invalidating them for all applications. Therefore, fabric patches lack the uniformity of pressure, breaking due to the variation of the fabric characteristics. Likewise, plastic patches break before or after, according to the exerted pressure due to lack of uniformity of the mechanical features of the plastic, which change according to temperature. On the other hand, there are patches with predefined breakage lines having the drawback of breaking before reaching the predetermined pressure due to local stress produced when unfolding the airbag.

For this reason, in the known art it is considered that constant thickness silicone patches are the most suitable ones, since said material has the greatest stability before temperature derived pressure variations. In this context, see the document EP 1 022 198 A1 on which the preamble of claim 1 is based.

One of the drawbacks of constant thickness silicone patches is that they deploy a considerable volume on inflation before breaking, making it necessary to have a lot of free space around the area to locate the inflated patch. This involves the drawback that if the patch touches any vehicle component or the occupant before inflating, it would not break at the right moment causing significant reduction in the effectiveness and protection levels to be provided to the vehicle occupants. On the other hand, the large volume of the inflated patch limits the location possibilities of the bag ventilation hole. Therefore, to avoid said problems it would be very beneficial to have an airbag with a patch not excessively deforming on inflation, without losing either resistance or effectiveness.

Non constant thickness elements to seal vent holes of airbags are also known in the art.

EP 0 835 787 discloses a metal, plastic or aluminium foil fastened to the airbag wall. The foil can be sewn, glued or welded to the airbag wall, and has at least one tear separation line formed as an impression. The foil has a flat section lying in the area of the vent hole which has a reduced thickness in relation to the remaining flat section.

GB 2 306409 discloses an airbag having a valve which is initially in the closed condition, but which can be opened to permit gas within the air-bag to be vented from the airbag, the valve being opened in response to a signal, means being provided to generate the signal to open the valve after the bag is at least partially inflated. In one embodiment, the valve, actuated by pyrotechnic means, comprises an element of material of predetermined thickness having a region of lesser thickness, the pyrotechnic charge being adapted to bum part of the region of lesser thickness.

### SUMMARY OF THE INVENTION

The present invention proposes an airbag in which the venting hole sealing patch does not excessively swell during the airbag bag inflation process to prevent the situation in which instead of breaking on reaching a determined inside pressure, it does so in advance on coming into contact with some vehicle component, preventing the correct airbag performance.

This object is achieved with variable thickness patches where the deformation of the areas of greatest thickness is less and therefore the total volume deployed by the inflated patch before breakage is much less than that deployed by a constant thickness and uniform patch.

An additional object is to appropriately control the patch breakage pressure.

For this purpose and according to the invention, the patch is configured in sections of different thicknesses. In a patch with the latter features, breakage is not necessarily produced in one of the sections of less thickness, although situated at the ends where it would be most expected, but tends to occur in the centre, the point where the greatest deformation is reached.

In a preferred embodiment, the central section has less thickness, not because breakage is provoked at this point, but because it facilitates breakage pressure control. In this context, it has been observed that for a specific thickness of the central section, its dimension determines the breakage pressure, such that for a ventilation hole of a determined diameter, patches may be obtained with different breakage pressures, the size of the central section of the patch being the only variable.

The patch according to the present invention is made of silicone,

On the other hand, the patch is fixed to the bag wall by means of sticking, sewing, welding or similar methods.

These and other features and advantages of the invention may be more clearly appreciated by the detailed description of the embodiments of the invention to be carried out below, with illustrative and non-limiting purposes and referring to the attached drawings.

### DESCRIPTION OF THE DRAWINGS

Figure 1 shows a perspective view of an airbag whose bag has a ventilation hole with a sealing patch.
Figures 2a, 2b and 2c are schematic views of a constant thickness sealing patch known in the art, in plan and sectional views, both at rest and inflated, respectively.
Figures 3a, 3b and 3c are schematic views of a variable thickness sealing patch according to the present invention, in plan and sectional views, both at rest and inflated, respectively.
Figures 4a, 4b and 4c are schematic views of a sealing patch according to the present invention, with sections of three thicknesses, in plan and sectional views, both at rest and inflated, respectively.
Figures 5a, 5b and 5c are schematic views of a sealing patch according to the present invention with sections of two thicknesses, in plan and sectional views, both at rest and inflated, respectively.

### DETAILED DESCRIPTION OF THE INVENTION

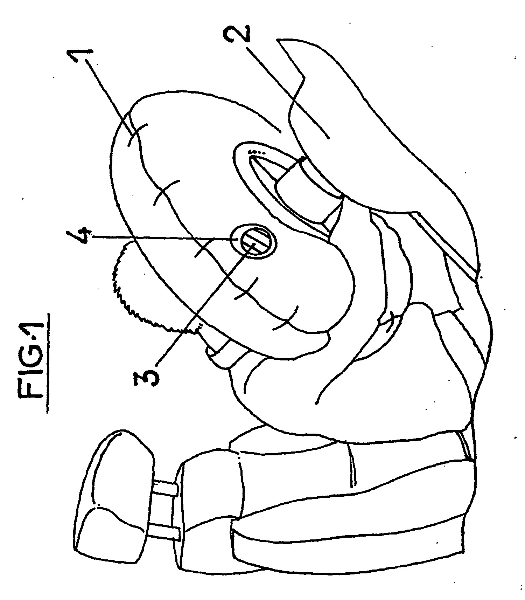

Figure 1 shows an airbag comprising an expandable bag 1 with conventional features, a gas generator 2, also conventional, to expand said bag whenever necessary, with the purpose of making it situate itself in a suitable position to restrain the displacement of the vehicle occupant, derived from an impact or similar situation, absorbing his/her kinetic energy in the case of sudden deceleration. Said bag 1 has a hole 3 in its wall for gas venting, covered by a patch 4 fixed to the bag wall, such that patch 4 is of a weaker material than bag 1. The patch 4 has the function of allowing the gas generator 2 to quickly expand bag 1, limiting gas escape flow through the hole 3 during bag expansion.

According to the invention, a variable thickness patch permits, as compared with a constant thickness patch, the reduction of the volume reached in its inflated condition, before being broken due to the effect of gas pressure.

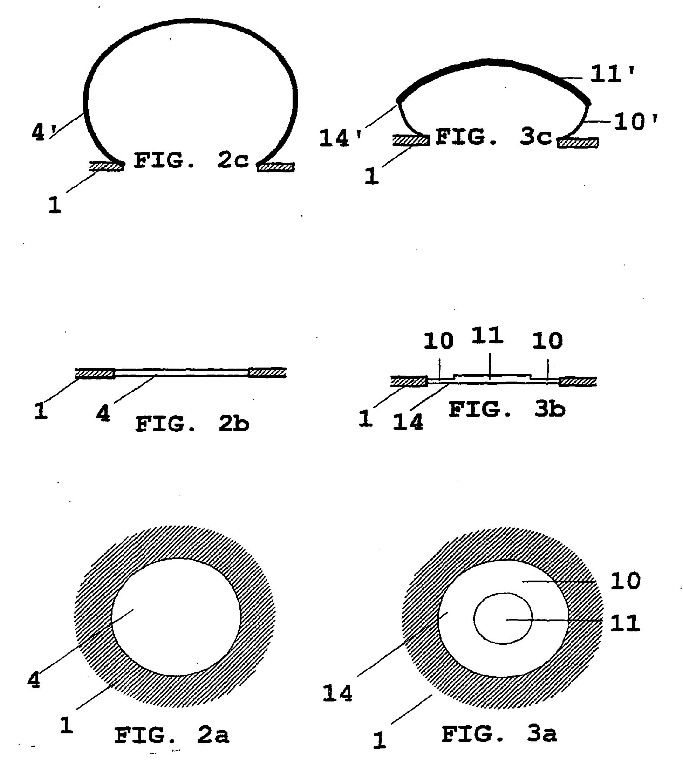

For reference purposes, Figures 2a, 2b and 2c show a constant thickness patch 4 known in the art, applied over a ventilation hole and with a circular shape. The inflated patch 4' follows a horseshoe shape as from the edges of the bag 1 and has considerable volume.

Although variable thickness patches according to the invention may have several shapes, the preferred ones are those using sections of different thickness like those shown in the figures related to the invention.

Following figures 3a, 3b and 3c, a patch 14 may be seen according to the invention, with sections 10 and 11 of different thickness. The variable thickness inflated patch 14' deploys a volume considerably less than that deployed by a constant thickness patch 4'. Contrary to that which may be first thought, the patch will tend to break at the centre of the section 11' and not at the side areas 10', although the thickness of the latter is less.

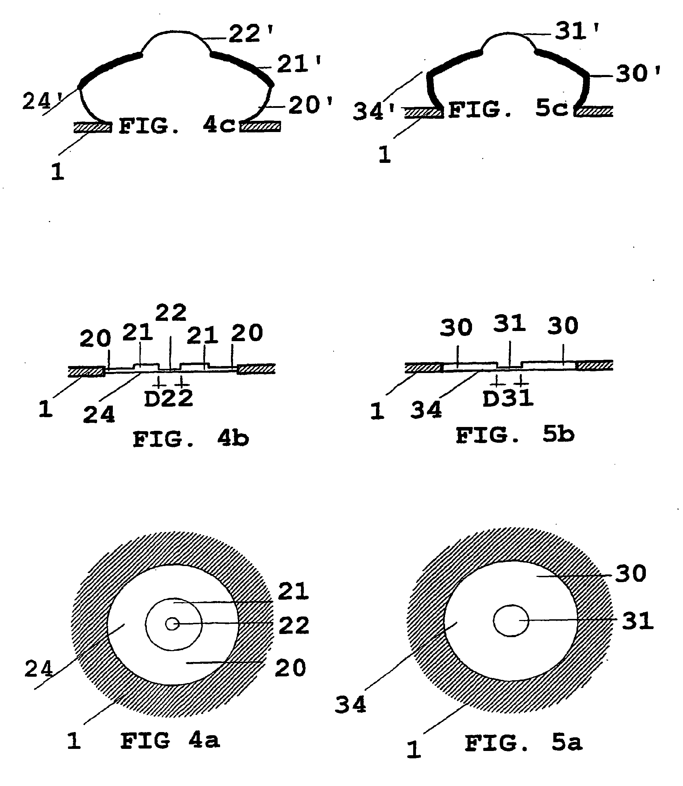

Another embodiment shown in figures 4a, 4b and 4c is that of a patch 24 with three sections 20, 21 and 22 of different widths. In the inflated patch 24', it may be seen that the areas 21' of greater thickness, significantly limit the volume deployed during inflation as compared with a constant thickness patch 4'. By using this type of patch, it has been found that the breakage pressure depends on the size of the central area. For a determined ventilation area and some specific thicknesses of the sections 20, 21 and 22, an increase of the diameter D 22 of 5 mm implies a reduction of the opening pressure of approximately 50 mbar.

Another embodiment which, as the above, likewise achieves the objects of reducing the volume deployed by the inflated patch and controls the breakage pressure is that shown in figures 5a, 5b and 5c in which a patch 34 is observed with two areas 30 and 31 of different thickness. In this case, the dimension of the central area, that is D31, will not determine the breakage pressure of the patch for some specific thickness of the areas 30 and 31.

An important advantage of these patches with a central section of less thickness and variable dimension according to the required breakage pressure is that they permit that a wide range of ventilation holes and breakage pressures may be covered with a same design. This advantage is especially significant as compared with constant thickness patches in which, apart from deploying considerable inflation volumes, the thickness should be modified every time it is desired that the breakage pressure increases or decreases.

The patch object of the present invention will preferably be carried out by moulding silicone.

It is not considered necessary to extend this description further for an expert in the matter to understand its scope and the advantages it contributes, as well as carrying out a practical execution of the invention.

Although several embodiments of the invention have been described and shown, it is evident that modifications may be incorporated within its scope, not being interpreted as limited to said embodiments but to the contents of the following claims.

## Claims

1. An airbag with a sealing patch for the gas venting hole to restrain the displacement of vehicle occupants in case of collision, comprising an expandable bag (1), a gas generator (2) to inflate said bag and at least one hole (3) in the wall of the bag (1) for gas venting, covered by a patch (14, 24, 34) made of silicone fixed to the bag wall, said patch being broken due to the effect of gas reaching a pretedermined inside pressure, **characterised in that** said patch (14, 24, 34) comprises at least two sections (10, 11; 20, 21, 22; 30, 31) of different thickness arranged such that the volume deployed by the patch during inflation is considerably less than that deployed by a constant thickness silicone patch (4') having the same breakage pressure.

2. An airbag with a sealing patch for the gas venting hole according to claim 1, **characterised in that** the sealing patch (14, 24, 34) is configured in at least three sections, being at least two of them of different thickness.

3. An airbag with a sealing patch for the gas venting hole according to claim 2, **characterised in that** the sealing patch (24, 34) includes a central section (22, 31) of less thickness than the other sections.

4. An airbag with a sealing patch for the gas venting hole according to claim 1, **characterised in that** said patch (14, 24, 34) is fixed to the bag (1) wall by means of sticking, sewing or welding techniques.

## Patentansprüche

1. Airbag mit einem Verschlussstück für die Gasauslassöffnung, der zum Begrenzen der Verlagerung von Fahrzeuginsassen im Falle einer Kollision vorgesehen ist, mit einem expandierbaren Sack (1), einem Gasgenerator (2) zum Aufblasen des Sacks, und mindestens einer Öffnung (3) in der Wand des Sacks (1) für den Gasauslaß, welche von einem an der Sackwand angebrachten Einsatzstück (14, 24, 34) aus Silikon abgedeckt ist, wobei das Einsatzstück durch die Wirkung von einen vorbestimmten Innendruck erreichendem Gas zerstört wird, **dadurch gekennzeichnet, dass** das Einsatzstück (14, 24, 34) mindestens zwei Abschnitte (10, 11; 20, 21, 22; 30, 31) unterschiedlicher Dicke aufweist, die derart angeordnet sind, dass das Entfaltungsvolumen des Einsatzstücks während des Aufblasens erheblich geringer ist, als das von einem Silikoneinsatzstück (4') konstanter Dicke mit der gleichen Bruchbelastbarkeit entfaltete Volumen.

2. Airbag mit Verschlussstück für die Gasauslassöffnung nach Anspruch 1, **dadurch gekennzeichnet, dass** das Verschlussstück (14, 24, 34) aus mindestens drei Abschnitten gebildet ist, von denen mindestens zwei eine unterschiedliche Dicke haben.

3. Airbag mit Verschlussstück für die Gasauslassöffnung nach Anspruch 2, **dadurch gekennzeichnet, dass** das Verschlussstück (24, 34) einen Mittelabschnitt (22, 31) mit geringerer Dicke als die anderen Abschnitte aufweist.

4. Airbag mit Verschlussstück für die Gasauslassöffnung nach Anspruch 1, **dadurch gekennzeichnet, dass** das Verschlussstück (14, 24, 34) an der Wand des Sacks (1) durch Klebe-, Näh- oder Schweißverfahren angebracht ist.

## Revendications

1. Sac gonflable comportant une pièce d'obturation pour l'orifice de dégagement de gaz afin d'empêcher le déplacement d'occupants du véhicule dans le cas d'une collision, comprenant un sac (1) propre à être gonflé, un générateur de gaz (2) afin de gonfler ledit sac, et au moins un orifice (3) dans la paroi du sac (1) pour le dégagement de gaz, lequel orifice est recouvert par une pièce (14, 24, 34) faite en silicone et fixée à la paroi du sac, ladite pièce étant rompue lorsque le gaz atteint une pression interne prédéterminée, **caractérisé en ce que** ladite pièce (14, 24, 34) comprend au moins deux parties (10, 11 ; 20, 21, 22 ; 30, 31) d'épaisseurs différentes et prévues pour que le volume déployé par la pièce pendant le gonflage soit considérablement moindre que celui qui est déployé par une pièce (4') en silicone d'épaisseur constante ayant la même pression de rupture.

2. Sac gonflable comportant une pièce d'obturation pour l'orifice de dégagement de gaz selon la revendication 1, **caractérisé en ce que** la pièce d'obturation (14, 24, 34) est conformée en au moins trois parties, au moins deux d'entre elles présentant des épaisseurs différentes.

3. Sac gonflable comportant une pièce d'obturation pour l'orifice de dégagement de gaz selon la revendication 2, **caractérisé en ce que** la pièce d'obturation (24, 34) comprend une partie centrale (22, 31) dont l'épaisseur est inférieure à celle des autres parties.

4. Sac gonflable comportant une pièce d'obturation pour l'orifice de dégagement de gaz selon la revendication 1, **caractérisé en ce que** ladite pièce (14, 24, 34) est fixée à la paroi du sac (1) par des procédés de collage, de couture ou de soudage.
